**Europäisches Patentamt**

**European Patent Office**

**Office européen des brevets**

(19)

(11) Veröffentlichungsnummer : **0 220 558 B1**

(12) **EUROPÄISCHE PATENTSCHRIFT**

(45) Veröffentlichungstag der Patentschrift :
16.01.91 Patentblatt 91/03

(51) Int. Cl.⁵ : **B23B 31/30,** B23Q 1/00,
F16L 39/04

(21) Anmeldenummer : 86113942.6

(22) Anmeldetag : 08.10.86

(54) **Druckmittelverteiler für umlaufende Spannzylinder.**

(30) Priorität : 23.10.85 DE 3537686

(43) Veröffentlichungstag der Anmeldung :
06.05.87 Patentblatt 87/19

(45) Bekanntmachung des Hinweises auf die
Patenterteilung :
16.01.91 Patentblatt 91/03

(84) Benannte Vertragsstaaten :
AT CH DE ES FR GB IT LI SE

(56) Entgegenhaltungen :
EP-A- 0 176 418
DE-A- 3 016 088
GB-A- 2 000 701
US-A- 4 221 160

(73) Patentinhaber : Röhm, Günter Horst
Heinrich-Röhm-Strasse 50
D-7927 Sontheim (DE)

(72) Erfinder : Röhm, Günter Horst
Heinrich-Röhm-Strasse 50
D-7927 Sontheim (DE)

(74) Vertreter : Fay, Hermann, Dipl.-Phys. Dr. et al
Ensingerstrasse 21 Postfach 1767
D-7900 Ulm (Donau) (DE)

**Beschreibung**

Die Erfindung betrifft einen ölhydraulisch betätigten Spannzylinder für Spanneinrichtungen an einer rotierenden Spindel, insbes. Drehmaschinenspindel, mit einem an die Spindel anschließbaren Zylindergehäuse und einem in dessen Zylinderkammer verstellbaren Spannkolben, wobei das Zylindergehäuse und der Spannkolben mit der Spindel rotieren, ferner mit einem äußere Zu-und Abführanschlüsse für das Öl aufweisenden feststehenden Anschlußgehäuse, das koaxial zur Zylinderachse auf einem Führungsansatz des Zylindergehäuses gelagert ist, der zwischen sich und dem Anschlußgehäuse eine von Öl gefüllte Ringspaltdichtung bildet und Verbindungskanäle aufweist, die einerseits zu den Zylinderräumen beidseits des Spannkolbens führen und andererseits in zum Ringspalt der Dichtung offenen, mit den Zu- und Abführanschlüssen in Verbindung stehenden inneren Ringnuten münden, weiter mit axial beidseits dieser inneren Ringnuten und radial zwischen dem Führungsansatz und dem Anschlußgehäuse angeordneten Wälzlagern und in der Wand des Anschlußgehäuses vorgesehenen, zum Ringspalt der Dichtung hin offenen mittleren Ringnuten, von welchen sich je eine axial zwischen den inneren Ringnuten einerseits und den Wälzlagern andererseits befindet und die über Auslaufkanäle in der Wand des Anschlußgehäuses an einen Ölsammelraum angeschlossen sind sowie mit den Wälzlagern zum Zweck der Lagerschmierung in Verbindung stehen, und mit einer im Anschlußgehäuse neben jedem Wälzlager auf dessen von den inneren und mittleren Ringnuten abgewandter Seite angeordneten Lecköl-Ringnut, wobei auch die Lecköl-Ringnuten über Auslaufkanäle an den Ölsammelraum angeschlossen sind.

Bei derartigen beispielsweise aus der DE-OS 33 06 571 bekannten Spannzylindern bildet ein Teil des durch eine der inneren Ringnuten zugeführten Hydrauliköls den die Ringspaltdichtung schließenden Ölfilm, wobei das den Ringspalt der Dichtung durchdringende Öl in die mittleren Ringnuten gelangt, aus welchen es in den Ölsammelraum ablaufen und im übrigen in die Wälzlager zu deren Schmierung übertreten kann. In den Wälzlagern befindliches Überschußöl sammelt sich in den Lecköl-Ringnuten, deren Auslaufkanäle an die mittleren Ringnuten bzw. deren Auslaufkanäle angeschlossen sind, so daß auch das aus den Wälzlagern austretende Öl in den Ölsammelraum gelangen kann. Bei dieser Art der Ölzuführung zu den Wälzlagern ist dasjenige Wälzlager bevorzugt, das axial auf derselben Seite wie die der Ölzufuhr zum Spannzylinder dienende innere Ringnut liegt. Soweit durch häufigeres Umschalten der Arbeitsrichtung des Spannkolbens die Druckbeaufschlagung der beiden inneren Ringnuten entsprechend abwechselt, ist im zeitlichen Mittel eine ausreichend gleichmäßige Schmierung beider Wälzlager gegeben. Wird dagegen über längere Zeit hinweg nur eine der beiden inneren Ringnuten mit dem Hydraulikdruck beaufschlagt, so kann die Schmierung des Wälzlagers auf der Seite der drucklosen inneren Ringnut beeinträchtigt und sogar unzureichend werden. Im übrigen ist bei derartigen Spannzylindern besonders bei hohen Drehgeschwindigkeiten der Öldurchsatz in der Spaltringdichtung stets problematisch. Die aus dem Ringspalt der Dichtung austretende Ölmenge durch axial große Ringspaltlänge gering zu halten, verbietet sich in der Regel deswegen, weil in der dann entsprechend größeren Ölfilmfläche der Ringspaltdichtung die durch innere Reibung im Ölfilm entstehende Wärme mit der Drehzahl schnell anwächst und u. U. nicht mehr ausreichend abgeführt werden kann. Hält man aber die Ringspaltlänge kurz, die Ölfilmfläche in der Ringspaltdichtung also klein, so muß dafür gesorgt werden, daß das in entsprechend größerer Menge aus dem Ringspalt austretende Öl abfließen kann und sich möglichst keine Staudrucke aufbauen, die das ausgetretene Öl überhaupt nach außen ins Freie und/oder doch zumindest in Bereiche und Freiräume zwischen dem Anschlußgehäuse und dem Führungsansatz drücken, in welchen das Öl verwirbelt und vernebelt werden kann, was im Freien mit entsprechender Ölverschmutzung der Umgebung und im Inneren des Anschlußgehäuses wiederum mit erheblicher Wärmeentwicklung verbunden wäre. Auch insoweit lassen die bekannten Anordnungen zu wünschen übrig.

Der Erfindung liegt die Aufgabe zugrunde, einen Spannzylinder der eingangs genannten Art so auszubilden, daß auch bei kleiner Ölfilmfläche in der Ringspaltdichtung das in die mittleren Ringnuten austretende Öl möglichst drucklos ablaufen kann und die Wälzlager nur in der für ihre Schmierung wirklich benötigten Menge und im übrigen gleichmäßig unabhängig davon versorgt, welche der beiden inneren Ringnuten die jeweils druckführende Ringnut ist.

Diese Aufgabe wird nach der Erfindung dadurch gelöst, daß die mittleren Ringnuten durch mindestens einen in der Wand des Anschlußgehäuses verlaufenden Ausgleichskanal miteinander und über je einen Drosselkanal mit dem neben ihnen liegenden Wälzlager verbunden sind, daß ferner axial zwischen jeder mittleren Ringnut und dem neben ihr liegenden Wälzlager eine zum Ringspalt der Dichtung hin offene äußere Ringnut vorgesehen ist, die ebenfalls über einen Auslaufkanal in der Wand des Anschlußgehäuses mit dem Ölsammelraum in Verbindung steht, und daß die Auslaufkanäle der äußeren Ringnuten und der Lecköl-Ringnuten einerseits und die Auslaufkanäle der mittleren Ringnuten andererseits getrennt voneinander im Ölsammelraum münden.

Durch die Ausgleichskanäle tragen beide mittleren Ringnuten und ihre Auslaufkanäle zur Abfuhr des aus der Ringspaltdichtung axial austretenden Öls bei, so daß sich in diesen mittleren Ringnuten keine hohen Staudrucke aufbauen können, und zwar im wesentlichen unabhängig davon, durch welche der beiden inneren Ringnuten die Ölzuführung zu den Zylinderkammern beidseits des Spannkolbens erfolgt. Unabhängig davon ist daher auch die Ölversorgung beider Wälzlager, die somit auch dann gewährleistet ist, wenn die Ölzufuhr über längere Zeit hinweg durch immer dieselbe der beiden inneren Ringnuten stattfindet. Die äußeren Ringnuten verhindern, daß Öl aus den mittleren Ringnuten unmittelbar durch den Ringspalt zwischen dem Anschlußgehäuse und dem Führungsansatz zu den Wälzlagern gelangen kann. Die Ölzuführung zu den Wälzlagern findet daher ausschließlich durch die Drosselkanäle statt, die durch passende Größe ihres lichten Querschnitts eine sehr genaue Dosierung des Öldurchflusses ermöglichen, so daß die Wälzlager auch bei hohen Drehgeschwindigkeiten nicht mehr als die zur Schmierung wirklich benötigte, in der Regel nur geringe Ölmenge erhalten und Ölverwirbelungen bzw. -vernebelungen in den Wälzlagern vermieden werden. Da schließlich die Auslaufkanäle der äußeren Ringnuten und der Lecköl-Ringnuten getrennt von jenen der mittleren Ringnuten im Ölsammelraum münden, kann sich ein in den mittleren Ringnuten und ihren Auslaufkanälen u. U. noch bildender Staudruck nicht nachteilig auf den Ölablauf aus den äußeren Ringnuten und vor allem aus den Lecköl-Ringnuten auswirken, so daß in den Lecköl-Ringnuten Staudrucke, die einen Ölaustritt zwischen dem Anschlußgehäuse und dem Führungsansatz nach außen ins Freie bewirken könnten, zuverlässig vermieden werden.

Um für den Ölablauf aus den mittleren und äußeren Ringnuten sowie aus den Lecköl-Ringnuten die Wirkung der Schwerkraft nutzen zu können, ist eine bevorzugte Ausführungsform dadurch gekennzeichnet, daß in der Betriebslage des Anschlußgehäuses der Ölsammelraum am Anschlußgehäuse an dessen vertikal tiefster Stelle angeordnet ist und die von den Ringnuten an oder im Bereich ihrer tiefsten Stelle ausgehenden Auslaufkanäle abwärts zum Ölsammelraum verlaufen. Weiter empfiehlt es sich, daß in der Betriebslage des Anschlußgehäuses die Drosselkanäle vertikal an oder im Bereich der tiefsten Stelle der mittleren Ringnuten bzw. Wälzlager angeordnet und von Längsrillen gebildet sind, die axial entlang der Mantelfläche von Stopfbolzen verlaufen, die in zwischen den Wälzlagern und ihrer jeweiligen mittleren Ringnut vorgesehene Bohrungen eingesetzt sind. Dadurch steht in den mittleren Ringnuten das Öl immer an den Mündungen der Drosselkanäle an und diese selbst können bezüglich ihrer Öldurchlässigkeit in einfacher Weise durch entsprechende Wahl des Längsrillenprofils den jeweiligen Erfordernissen angepaßt werden.

Zweckmäßig stehen die äußeren Ringnuten jeweils über einen radial breiteren Ringspalt mit dem ihnen benachbarten Wälzlager in Verbindung, so daß eine Ölabfuhr aus den Wälzlagern außer durch die Lecköl-Ringnuten auch durch die äußeren Ringnuten erfolgen kann. Dabei empfiehlt es sich in der Regel, die äußeren Ringnuten bzw. die an sie anschließenden verbreiterten Ringspalte in der Wand des Anschlußgehäuses anzuordnen. Im übrigen können die äußere Ringnut und die Lecköl-Ringnut an jedem Wälzlager eine gemeinsame Auslaufmündung in den Ölsammelraum aufweisen.

Um die Sicherheit gegen einen Ölaustritt aus der Lecköl-Ringnut durch den Ringspalt zwischen dem Anschlußgehäuse und dem Führungsansatz nach außen ins Freie noch zu erhöhen, besteht die sehr vorteilhafte Möglichkeit, in jeder Lecköl-Ringnut eine gegenüber dem Wälzlager und der Nutwandung freie Nuträume bildende Ringscheibe anzuordnen, die innenseitig auf dem Führungsansatz sitzt und radial das Wälzlager nach außen hin übergreift. Dabei empfiehlt es sich im einzelnen, daß die Ringscheibe auf ihrer von Wälzlager abgewandten Seite axial gegen eine Ringschulter abgestützt ist, die von einem am Führungsansatz festen Bund gebildet ist, daß das Anschlußgehäuse gegen die äußere Umfangsfläche des Bunds abdichtet, und daß der zwischen dem Bund und dem Anschlußgehäuse gebildete Dichtspalt in den freien Nutraum zwischen der Ringscheibe und der axial äußeren Nutwandung der Lecköl-Ringnut mündet, wobei diese Mündung von der Ringscheibe radial nach außen hin übergriffen ist. Die Ringscheibe schirmt den Dichtspalt gegen das Wälzlager ab und schleudert, da sie sich mit dem Führungsansatz dreht, auf ihr befindliches Öl radial auswärts gegen den Boden der Lecköl-Ringnut ab, so daß nur noch darauf zu achten ist, den Dichtspalt radial möglichst weit innen in der Lecköl-Ringnut münden zu lassen. Weiter ist es besonders günstig, in der axial äußeren Nutwandung der Lecköl-Ringnut an deren in Betriebslage des Anschlußgehäuses vertikal tiefster Stelle eine sich zwischen der Dichtspaltmündung und dem Nutboden erstreckende, axial vertiefte Tasche, in deren Bereich die Mündung des Auslaufkanals liegt, und zwischen dieser Nutwandung und dem Nutboden einen axialen Einstich vorzusehen, der in Umfangsrichtung beidseits in der Tasche mündet, wodurch ebenfalls ein Ölfluß zum Dichtspalt hin verringert wird. In dieser Ausführungsform empfiehlt es sich im übrigen, den Dichtspalt zwischen dem Bund und dem Anschlußgehäuse axial mit Abstand von der Dichtspaltmündung in die Lecköl-Ringnut durch eine ringförmige Ölablaufnut im Anschlußgehäuse zu erweitern, die in Umfangsrichtung die Tasche anschneidet und der radial gegenüber am Bund eine Ölfangnut angeordnet ist. In die Ölfangnut eintretendes Öl wird in die Ölablaufnut abgeschleudert und fließt durch die Tasche und die Lecköl-Ringnut ab.

Im folgenden wird die Erfindung an einem in der Zeichnung dargestellten Ausführungsbeispiel näher erläutert ; es zeigen :

Fig. 1 einen Spannzylinder nach der Erfindung in einer Seitenansicht, teils im Axialschnitt,

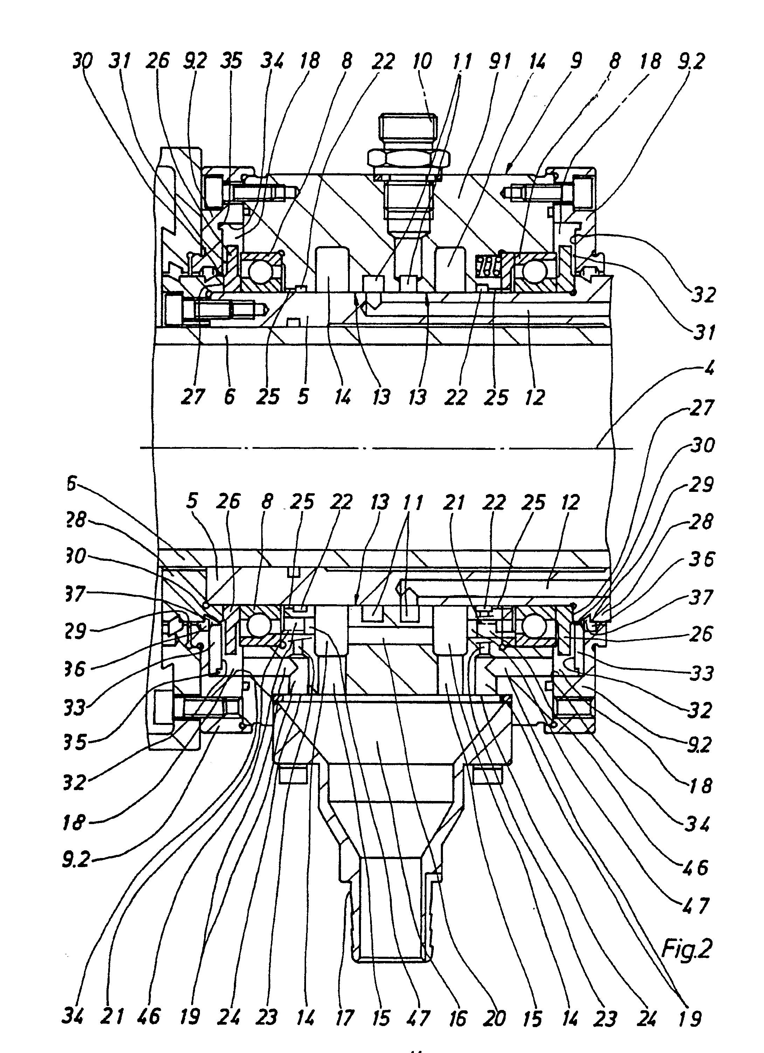

Fig. 2 einen Teil der Fig. 1 in gegenüber Fig.1 vergrößerter Darstellung,

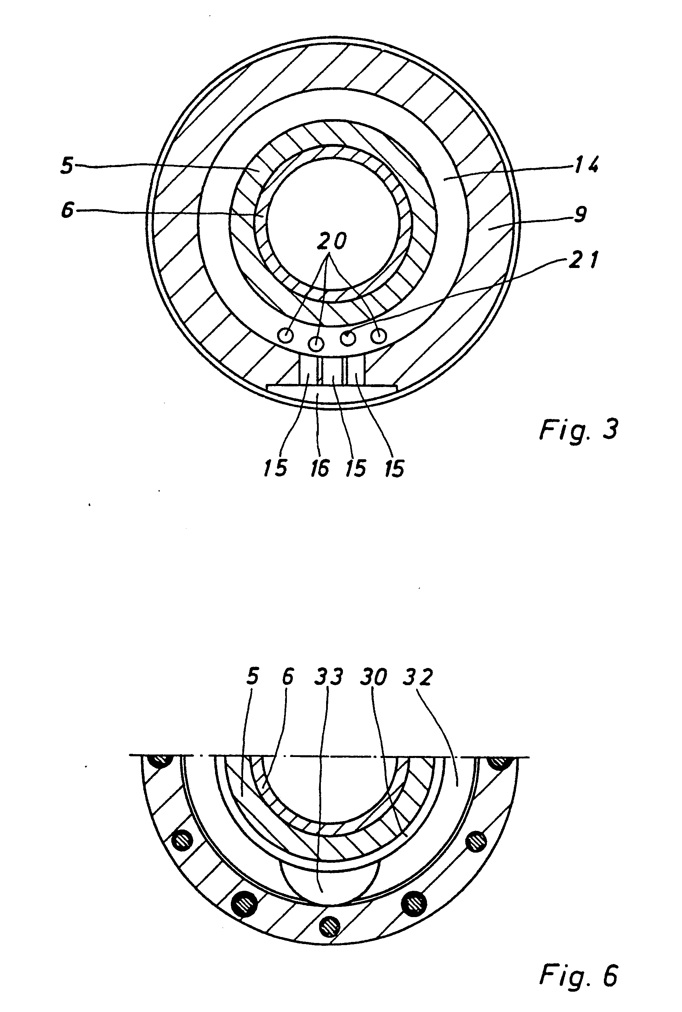

Fig. 3 einen Schnitt in Richtung III - III durch den Gegenstand nach Fig. 1,

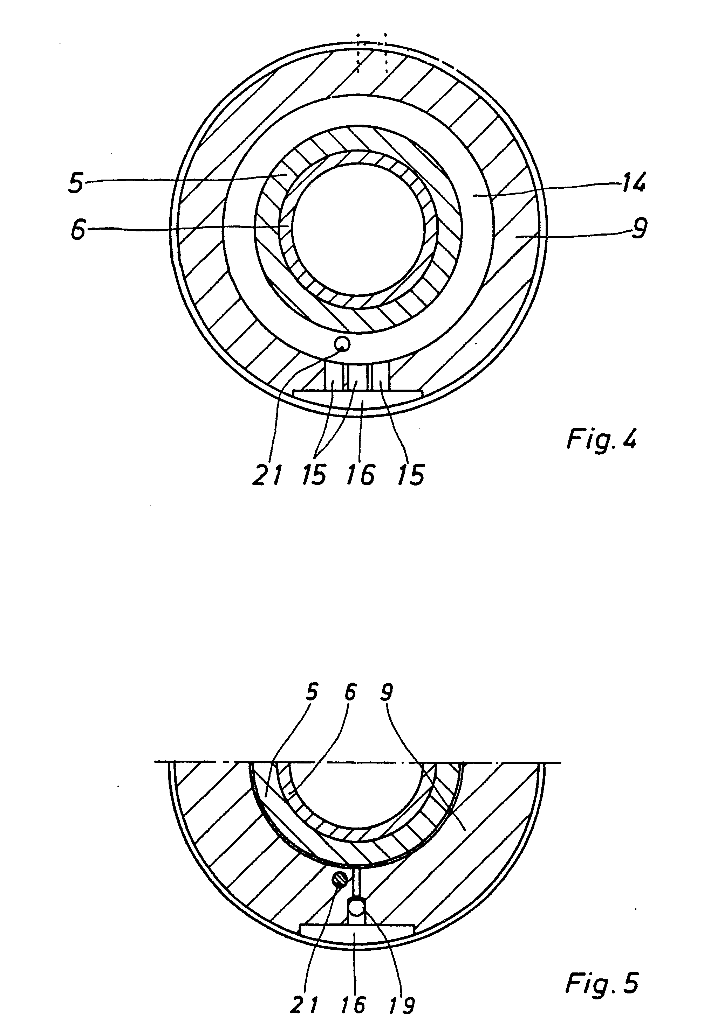

Fig. 4 einen Schnitt in Richtung IV - IV durch den Gegenstand nach Fig. 1,

Fig. 5 einen Schnitt in Richtung V - V durch den Gegenstand der Fig. 1 und

Fig. 6 einen Schnitt in Richtung VI - VI durch den Gegenstand der Fig. 1, wobei in den Fig. 4 und 5 der Ölsammelraum der Einfachheit wegen nicht dargestellt ist.

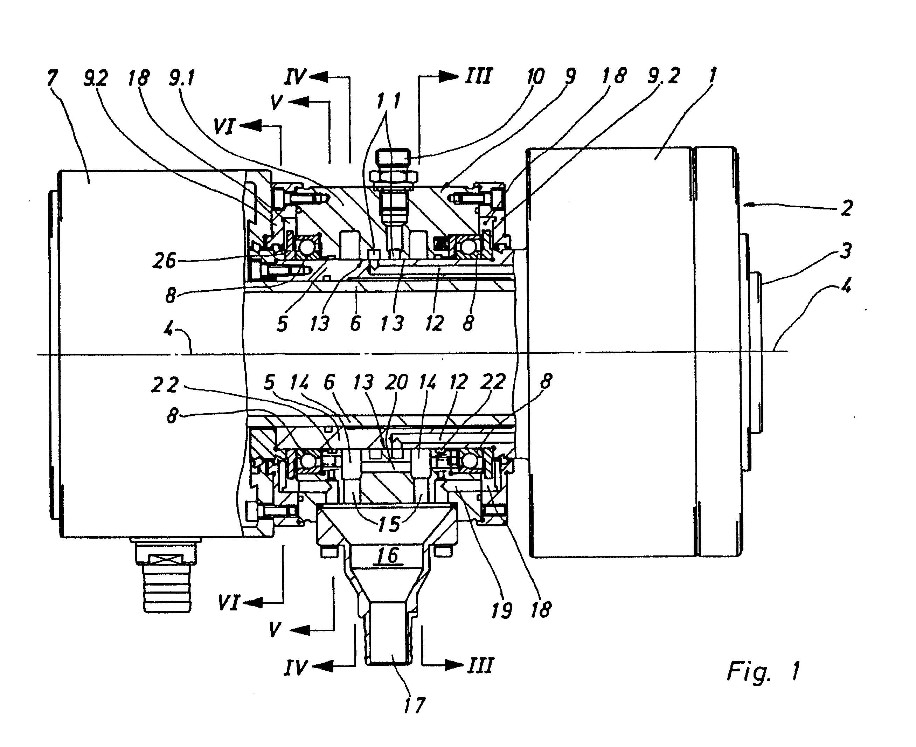

In Fig. 1 ist das Zylindergehäuse mit 1 bezeichnet. An seiner vorderen Stirnwand 2 ist es in üblicher, hier nicht weiter zu beschreibender Weise zum Anschluß an die nicht dargestellte Maschinenspindel einer Drehmaschine eingerichtet. Im Zylindergehäuse 1 befindet sich eine Zylinderkammer, in der axial verschiebbar ein Zylinderkolben angeordnet ist, der an seiner Vorderseite einen Kragen 3 trägt,der durch die spindelseitige Stirnwand 2 des Zylindergehäuses 1 führt und an ein ebenfalls nicht dargestelltes, in der hohlen Drehmaschinenspindel angeordnetes Kraftübertragungsglied, beispielsweise eine Spannstange oder ein Spannrohr, anschließbar ist. Der Spannkolben ist gegen das Zylindergehäuse 1 abgedichtet, so daß das in die Zylinderräume beidseits des Spannkolbens eintretende Hydrauliköl nicht entweichen kann. Um außerdem das Hydrauliköl in den Zylinderräumen gegen unbeabsichtigte Druckverluste zu sichern, sind in der Wand des Zylindergehäuses 1 Sperrventile vorgesehen, die ebenfalls nicht dargestellt sind, aber in bekannter Weise funktionieren und daher hier keiner weiteren Beschreibung bedürfen.

An seinem rückwärtigen Ende trägt das Zylindergehäuse 1 einen zur Zylinderachse 4 koaxialen hohlzylindrischen Führungsansatz 5, in dem innen ein mit dem Spannkolben verbundenes Rohr 6 geführt ist, dessen lichter Querschnitt den Durchgang des im Ausführungsbeispiel als Hohlspannzylinder ausgeführten Spannzylinders bildet. Das Rohr 6 setzt sich in ein Kontrollgehäuse 7 fort, das Einrichtungen zur Wegkontrolle des Rohres 6 und damit des Spannkolbens besitzt. Der Führungsansatz 5 und das Rohr 6 nehmen zusammen mit dem Zylindergehäuse 1 und dem Spannkolben an der Drehung der Spindel bzw. des Spannrohrs teil.

Auf der Außenseite des Führungsansatzes 5 ist über zwei Wälzlager 8 ein feststehendes, d. h. an der Drehung des Führungsansatzes 5 nicht teilnehmendes Anschlußgehäuse 9 gelagert, das das Kontrollgehäuse 7 trägt und zwei äußere Zu- und Abführanschlüsse 10 für das Hydrauliköl aufweist, wobei in Fig. 1 nur einer diese Anschlüsse 10 dargestellt ist, demgegenüber der andere Anschluß in Umfangsrichtung am Anschlußgehäuse 9 versetzt und daher in Fig. 1 nicht sichtbar ist. Das Anschlußgehäuse besteht aus einem Mantelteil 9.1 und aus dieses stirnseitig abschließenden Ringplatten 9.2. In der Wand des Mantelteils 9.1 befinden sich zwei zum Rohr 6 hin offene innere Ringnuten 11, die mit den Zu- und Abführanschlüssen 10 verbunden sind. Im Führungsansatz 5 verlaufen Verbindungskanäle 12, die einerseits zu den Zylinderräumen beidseits des Spannkolbens führen und andererseits in den inneren Ringnuten 11 münden. Der Führungsansatz 5 und das Anschlußgehäuse 9 bilden zwischen sich eine vom Öl gefüllte Ringspaltdichtung, die einen Ringspalt 13 von nur wenigen hundertstel Millimetern Dicke aufweist. Das durch die inneren Ringnuten 11 in die Verbindungskanäle 12 und umgekehrt strömende und dabei den Ringspalt 13 quer durchfließende Öl breitet sich auch seitlich im Ringspalt 13 aus und dichtet so mit einem Ölfilm im Ringspalt die Ringspaltdichtung ab. Axial beidseits der inneren Ringnuten 11 zwischen diesen und den Wälzlagern 8 sind in der Wand des Anschlußgehäuses 9 zum Ringspalt 13 hin offene mittlere Ringnuten 14 vorgesehen, die über Auslaufkanäle 15 in der Wand des Anschlußgehäuses 9 an einen drucklosen Ölsammelraum 16 angeschlossen sind, der seinerseits über einen Stutzen 17 mit der drucklosen Seite der Hydraulikdruckquelle in Verbindung steht. Das aus dem Ringspalt 13 in die mittleren Ringnuten 14 austretende Öl kann aus diesen Ringnuten durch die Auslaufkanäle 15 in den Ölsammelraum 16 gelangen und von dort frei abfließen. Außerdem stehen die mittleren Ringnuten 14 mit den Wälzlagern 8 zum Zweck der Lagerschmierung und -kühlung in Verbindung, so daß ein Teil des in die mittleren Ringnuten 14 gelangenden Öls zu den Wälzlagern 8 fließen und von dort in Lecköl-Ringnuten 18 austreten kann, die im Anschlußgehäuse 9 neben jedem Wälzlager 8 auf dessen von den inneren und mittleren Ringnuten 11, 14 abgewandter Seite angeordnet sind. Auch diese Lecköl-Ringnuten 18 sind über Auslaufkanäle 19 an den Ölsammelraum 16 angeschlossen. Die mittleren Ringnuten 14 sind durch mehrere in der Wand des Anschlußgehäuses 9 verlaufende Ausgleichskanäle 20 miteinander und über je einen Drosselkanal 21 mit dem jeweils neben ihnen liegenden Wälzlager 8 verbunden, wobei die Ausgleichskanäle 20 radial möglichst weit innen angeordnet sind. Axial zwischen jeder mittleren Ringnut 14 und dem neben ihr liegenden Wälzlager 8 ist eine zum Ringspalt 13 hin offene äußere Ringnut 22 vorgesehen, die ebenfalls über einen Auslaufkanal 23 in der Wand des Anschlußgehäuses 9 mit dem Ölsammelraum 16 in Verbindung steht. Die Auslaufkanäle 19, 23 der äußeren Ringnuten 22 und der Lecköl-Ringnuten 18 einerseits und die Auslaufkanäle 15 der mittleren Ringnuten 14 andererseits münden getrennt voneinander im Ölsammelraum 16, während die Auslaufkanäle 19, 23 der äußeren Ringnuten 22 und der Lecköl-Ringnuten 18 wie im Ausführungsbeispiel eine gemeinsame Mündung 24 in den Ölsammelraum 16 besitzen können. In der Betriebslage des Anschlußgehäuses 9 entsprechend Fig. 1 befindet sich der Ölsammelraum 16 am Anschlußgehäuse 9 an dessen in vertikaler Richtung tiefster Stelle. Die von den Ringnuten 14, 18, 22 an oder im Bereich ihrer tiefsten Stelle ausgehenden Auslaufkanäle 15, 19, 23 verlaufen im wesentlichen abwärts zum Ölsammelraum 16 hin, so daß der Ölablauf durch die Wirkung der Schwerkraft begünstigt wird. Auch die Drosselkanäle 21 sind in der Betriebslage des Anschlußgehäuses 9 vertikal an oder im Bereich der tiefsten Stelle der mittleren Ringnuten 14 bzw. Wälzlager 8 angeordnet.

Strömt aus derjenigen von beiden inneren Ringnuten 11, die unter Druck steht, Öl in den Ringspalt 13 zwischen dem Führungsansatz 5 und dem Anschlußgehäuse 9, so schließt es diesen Ringspalt 13 durch Bildung des den Ringspalt füllenden Ölfilms. Das aus dem Ringspalt 13 austretende Öl gelangt in die mittleren Ringnuten 14, wobei sich Druckunterschiede in diesen mittleren Ringnuten 14 über die Ausgleichskanäle 20 ausgleichen, so daß unabhängig davon, welche der beiden inneren Ringnuten 11 mit Druck beaufschlagt ist, beide mittleren Ringnuten 14 mit Öl aus dem Ringspalt 13 gleichmäßig versorgt werden, das, außer durch die Auslaufkanäle 15 in den Ölsammelraum 16 direkt abzufließen, auch durch die Drosselkanäle 21 in die Wälzlager 8 gelangt, wobei der Querschnitt der Drosselkanäle 8 die den Wälzlagern 8 zuströmende Ölmenge einzustellen und zu dosieren gestattet. Aus den Wälzlagern 8 kann das Öl durch die Lecköl-Ringnuten 18 und die an sie angeschlossenen Auslaufkanäle 19 ebenfalls in den Ölsammelraum 16 gelangen. Die äußeren Ringnuten 22 verhindern, daß Öl aus den mittleren Ringnuten 14 unmittelbar zwischen dem Anschlußgehäuse 9 und dem Führungsansatz 5 hindurch zu den Wälzlagern 8 gelangen kann. Außerdem stehen diese äußeren Ringnuten 22 jeweils über einen radial verbreiterten Ringspalt 25 mit dem ihnen jeweils benachbarten Wälzlager 8 in Verbindung, so daß auch durch diesen verbreiterten Ringspalt 25 hindurch Öl von den Wälzlagern 8 in die äußeren Ringnuten 22 ablaufen kann. Die Ölzufuhr zu den Wälzlagern 8 erfolgt somit ausschließlich durch die Drosselkanäle 21, die im Ausführungsbeispiel durch Längsrillen gebildet sind, die axial entlang der Mantelfläche von zylindrischen Stopfbolzen 46 verlaufen, die in zwischen den Wälzlagern 8 und ihrer jeweiligen mittleren Ringnut 14 vorgesehene Bohrungen 47 eingesetzt sind. Die an die äußeren Ringnuten 22 anschließenden Auslaufkanäle 23 können im Vergleich zu den den Lecköl-Ringnuten 18 zugeordneten Auslaufkanälen 19 im Querschnitt enger ausgeführt sein, wie dies Fig. 1 zeigt. Diese äußeren Ringnuten 22 bzw. die an sie anschließenden verbreiterten Ringspalte 25 sind im Ausführungsbeispiel in der Wand des Anschlußgehäuses 9 angeordnet, können sich im Prinzip aber auch im Führungsansatz 5 befinden.

Der Strömungswiderstand der Drosselkanäle 21 ist in jedem Fall größer als der durch die Wälzlager 8, die Lecköl-Ringnuten 18 und deren Auslaufkanäle 19 für das Öl gebildete Strömungswiderstand, so daß das Öl in den Lecköl-Ringnuten 18 praktisch drucklos ist. Weiter ist in jeder Lecköl-Ringnut 18 eine gegenüber dem Wälzlager 8 und der Nutwandung sowie gegenüber dem Nutboden freie Nuträume bildende Ringscheibe 26 angeordnet, die innenseitig auf dem Führungsansatz 5 sitzt, also mit ihm rotiert, und radial das Wälzlager 8 nach außen hin übergreift. Die Ringscheibe 26 ist auf ihrer vom Wälzlager 8 abgewandten Seite axial gegen einen Ringschulter 27 abgestützt, die von einem am Führungsansatz 5 festen Bund 28 gebildet ist. Gegen die äußere Umfangsfläche 29 dieses Bunds 28 ist das Anschlußgehäuse 9 mit seinen Ringplatten 9.2 unter Bildung eines Dichtspaltes 30 abgedichtet. Dieser Dichtspalt 30 mündet in den freien Nutraum 31 zwischen der Ringscheibe 26 und der axial äußeren Nutwandung 32 der Lecköl-Ringnut 18 an radial möglichst weit innen liegender Stelle, so daß auch diese Mündung von der Ringscheibe 26 radial nach außen hin übergriffen ist. Die Ringscheibe 26 schirmt axial das Wälzlager 8 gegen die Mündung des Dichtspalts 30 ab. An der Ringscheibe 26 befindliches Öl wird bei der Rotation des Spannzylinders gegen den Boden 34 der Lecköl-Ringnut 18 abgeschleudert. In der axial äußeren Nutwandung 32 der Lecköl-Ringnut 18 befindet sich an deren in Betriebslage des Anschlußgehäuses 9 vertikal tiefster Stelle eine sich zwischen der Dichtspaltmündung und dem Nutboden erstreckende, axial vertiefte Tasche 33, in deren Bereich die Mündung des Auslaufkanals 19 liegt. Zwischen dieser Nutwandung 32 und dem Nutboden 34 ist ein axialer Einstich 35 vorgesehen, der in Umfangsrichtung beidseits in der Tasche 33 mündet. Gegen den Nutboden 34 abgeschleudertes Öl kann daher im Einstich 35 zur Tasche 33 hin abfließen, so daß ein Ölfluß an der dem Wälzlager 8 gegenüber liegenden, also axial äußeren Nutwandung 32 der Lecköl-Ringnut 18 radial nach innen zur Mündung des Dichtspalts 30 hin weitgehend vermieden wird. Um schließlich auch doch noch in den Dichtspalt 30 gelangendes Öl am axialen Austritt nach außen ins Freie oder in das Kontrollgehäuse 7 zu hindern, ist der Dichtspalt 30 zwischen dem Bund 28 und dem Anschlußgehäuse 9 axial mit Abstand von der Dichtspaltmündung in die Lecköl-Ringnut 18 durch eine ringförmige Ölablaufnut 36 im Anschlußgehäuse 9 erweitert. Diese Ölablaufnut 36 schneidet in Umfangsrichtung die Tasche 33 an, so daß in der Ölablaufnut 36 befindliches Öl durch die Tasche 33 in die Lecköl-Ringnut 18 und von da in den Ölsammelraum 16 gelangen kann. Der Ölablaufnut 36 radial gegenüber ist am Bund 28 eine Ölfangnut 37 angeordnet, deren axial auswärts liegende Nutflanke in einer zur Zylinderachse 4 praktisch senkrechten Ebene verläuft, so daß in die Ölfangnut 37 gelangendes Öl von dieser Nutflanke in die Ölablaufnut 36 abgeschleudert wird.

**Ansprüche**

1. Ölhydraulisch betätigter Spannzylinder für Spanneinrichtungen an einer rotierenden Spindel, insbesondere Drehmaschinenspindel, mit einem an die Spindel anschließbaren Zylindergehäuse (1) und einem in dessen Zylinderkammer verstellbaren Spannkolben, wobei das Zylindergehäuse (1) und der Spannkolben mit der Spindel rotieren, ferner mit einem äußere Zu- und Abführanschlüsse (10) für das Öl aufweisenden feststehenden Anschlußgehäuse (9), das koaxial zur Zylinderachse (4) auf einem Führungsansatz (5) des Zylindergehäuses (1) gelagert ist, der zwischen sich und dem Anschlußgehäuse (9) eine von Öl gefüllte Ringspaltdichtung bildet und Verbindungskanäle (12) aufweist, die einerseits zu den Zylinderräumen beidseits des Spannkolbens führen und andererseits in zum Ringspalt (13) der Dichtung offenen, mit den Zu- und Abführanschlüssen (10) in Verbindung stehenden inneren Ringnuten (11) münden, weiter mit axial beidseits dieser inneren Ringnuten (11) und radial zwischen dem Führungsansatz (5) und dem Anschlußgehäuse (9) angeordneten Wälzlagern (8) und in der Wand des Anschlußgehäuses (9) vorgesehenen, zum Ringspalt (13) der Dichtung hin offenen mittleren Ringnuten (14), von welchen sich je eine axial zwischen den inneren Ringnuten (11) einerseits und den Wälzlagern (8) andererseits befindet und die über Auslaufkanäle (15) in der Wand des Anschlußgehäuses (9) an einen Ölsammelraum (16) angeschlossen sind sowie mit den Wälzlagern (8) zum Zweck der Lagerschmierung in Verbindung stehen, und mit einer im Anschlußgehäuse (9) neben jedem Wälzlager (8) auf dessen von den inneren und mittleren Ringnuten (11, 14) abgewandter Seite angeordneten Lecköl-Ringnut (18), wobei auch die Lecköl-Ringnuten (18) über Auslaufkanäle (19) an den Ölsammelraum (16) angeschlossen sind, dadurch gekennzeichnet, daß die mittleren Ringnuten (14) durch mindestens einen in der Wand des Anschlußgehäuses (9) verlaufenden Ausgleichskanal (20) miteinander und über je einen Drosselkanal (21) mit dem neben ihnen liegenden Wälzlager (8) verbunden sind, daß ferner axial zwischen jeder mittleren Ringnut (14) und dem neben ihr liegenden Wälzlager (8) eine zum Ringspalt (13) der Dichtung hin offene äußere Ringnut (22) vorgesehen ist, die ebenfalls über einen Auslaufkanal (23) in der Wand des Anschlußgehäuses (9) mit dem Ölsammelraum (16) in Verbindung steht, und daß die Auslaufkanäle (23, 19) der äußeren Ringnuten (22) und der Lecköl-Ringnuten (18) einerseits und die Auslaufkanäle (15) der mittleren Ringnuten (14) andererseits getrennt voneinander im Ölsammelraum (16) münden.

2. Spannzylinder nach Anspruch 1, dadurch gekennzeichnet, daß in der Betriebslage des Anschlußgehäuses (1) der Ölsammelraum (16) am Anschlußgehäuse (9) an dessen vertikal tiefster Stelle angeordnet ist und die von den Ringnuten (14, 18, 22) an oder im Bereich ihrer tiefsten Stelle ausgehenden Auslaufkanäle (15, 19, 23) abwärts zum Ölsammelraum (16) verlaufen.

3. Spannzylinder nach Anspruch 1 oder 2, dadurch gekennzeichnet, daß in der Betriebslage des Anschlußgehäuses (1) die Drosselkanäle (21) vertikal an oder im Bereich der tiefsten Stelle der mittleren Ringnuten (14) bzw. Wälzlager (8) angeordnet und von Längsrillen gebildet sind, die axial entlang der Mantelfläche von Stopfbolzen (46) verlaufen, die in zwischen den Wälzlagern (8) und ihrer jeweiligen mittleren Ringnut (14) vorgesehene Bohrungen (47) eingesetzt sind.

4. Spannzylinder nach einem der Ansprüche 1 bis 3, dadurch gekennzeichnet, daß die äußeren Ringnuten (22) jeweils über einen radial breiteren Ringspalt (25) mit dem ihnen benarchbarten Wälzlager (8) in Verbindung stehen.

5. Spannzylinder nach einem der Ansprüche 1 bis 4, dadurch gekennzeichnet, daß die äußere Ringnut (22) und die Lecköl-Ringnut (18) an jedem Wälzlager (8) eine gemeinsame Auslaufmündung (24) in den Ölsammelraum (16) aufweisen.

6. Spannzylinder nach einem der Ansprüche 1 bis 5, dadurch gekennzeichnet, daß in jeder Lecköl-Ringnut (18) eine gegenüber dem Wälzlager (8) und der Nutwandung freie Nuträume bildende Ringscheibe (26) angeordnet ist, die innenseitig auf dem Führungsansatz (5) sitzt und radial das Wälzlager (8) nach außen hin übergreift.

7. Spannzylinder nach Anspruch 6, dadurch gekennzeichnet, daß die Ringscheibe (26) auf ihrer vom Wälzlager (8) abgewandten Seite axial gegen eine Ringschulter (27) abgestützt ist, die von einem am Führungsansatz (5) festen Bund (28) gebildet ist, daß das Anschlußgehäuse (9) gegen die äußere Umfangsfläche (29) des Bunds (28) abdichtet, und daß der zwischen dem Bund (28) und dem Anschlußgehäuse (9) gebildete Dichtspalt (30) in den freien Nutraum zwischen der Ringscheibe (26) und der axial äußeren Nutwandung (32) der Lecköl-Ringnut (18) mündet, wobei diese Mündung von der Ringscheibe (26) radial nach außen hin übergriffen ist.

8. Spannzylinder nach Anspruch 7, dadurch gekennzeichnet, daß in der axial äußeren Nutwandung (32) der Lecköl-Ringnut (18) an deren in Betriebslage des Anschlußgehäuses (9) vertikal tiefster Stelle eine sich zwischen der Dichtspaltmündung und dem Nutboden (34) erstreckende, axial vertiefte Tasche (33) vorgesehen ist, in deren Bereich die Mündung des Auslaufkanals (19) liegt, und daß zwischen dieser Nutwandung (32) und dem Nutboden (34) ein axialer Einstich (35) vorgesehen ist, der in Umfangsrichtung beidseits in der Tasche (33) mündet.

9. Spannzylinder nach Anspruch 8, dadurch gekennzeichnet, daß der Dichtspalt (30) zwischen dem Bund (28) und dem Anschlußgehäuse (9) axial mit Abstand von der Dichtspaltmündung in die Lecköl-Ringnut (18) durch eine ringförmige Ölablaufnut (36) im Anschlußgehäuse (9) erweitert ist, die in Umfangsrichtung die Tasche (33) anschneidet und der radial gegenüber am Bund (28) eine Ölfangnut (37) angeordnet ist.

10. Spannzylinder nach Anspruch 1 oder 4, dadurch gekennzeichnet, daß die äußeren Ringnuten (22) bzw. die an sie anschließenden verbreiterten Ringspalte (25) in der Wand des Anschlußgehäuses (9) angeordnet sind.

**Claims**

1. Oil-hydraulically actuated clamping cylinder for clamping devices on a rotary spindle, in particular lathe spindle, with a cylinder housing (1) attachable to the spindle and a clamping piston movable in the chamber of said cylinder, the connecting housing (1) and the clamping piston rotating with the spindle, also comprising an outer supply and respectively discharge connexion (10) for the stationary connecting housing (9), which has the oil and which is mounted coaxial to the cylinder axis (4) on a guide projection (5) of the cylinder housing (1), the guide projection (5) forming an oil-filled annular space seal between itself and the connecting housing (9) and having joining channels (12), which on the one hand lead to the cylinder chambers on both sides of the clamping piston and on the other hand open out into inner annular grooves (11), which communicate with the supply and discharge connexions (10) and are open to the annular gap (13) of the seal, the clamping cylinder also comprising roller bearings (8), located axially on either side of these inner annular grooves (11) and radially between the guide projection (5) and the connecting housing (9), and middle annular grooves (14) provided in the wall of the connecting housing (9) and open with respect to the seal, one of these annular grooves (14) being located axially between the inner annular grooves (11) on the one hand and the roller bearings (8) on the other, and being connected to an oil collecting chamber (16) via drainage channels (15) in the wall of the connecting housing (9), as well as communicating with the roller bearings (8) for the purpose of lubricating the bearings, and comprising an oil overflow annular groove (18) located in the connecting housing (9) next to each roller bearing (8) on its side facing away from the inner and middle annular grooves (11, 14), the oil overflow annular grooves (18) also being connected to the oil collecting chamber (16) via drainage channels (19), characterised in that the middle annular grooves (14) are connected together by at least one equalising channel (20) running in the wall of the connecting housing (9) and are also connected to the roller bearing adjacent to them via a respective throttle channel (21), in that further, an outer annular groove (22) open to the seal, and which also communicates with the oil collecting chamber (16) via a drainage channel (23) in the wall of the connecting housing (9), is provided axially between each middle annular groove (14) and the adjacent roller bearing (8), and in that the drainage channels (23, 19) of the outer annular grooves (22) and of the oil overflow annular grooves (18) on the one hand and the drainage channels (15) of the middle annular grooves (14) on the other open separately into the oil collecting chamber (16).

2. Clamping cylinder according to claim 1, characterised in that in the operating position of the connecting housing (1) the oil collecting chamber (16) on the connecting housing (9) is at its vertically lowest point and the drainage channels (15, 19, 23) starting at or in the region of its lowest point run down to the oil collecting chamber (16).

3. Clamping cylinder according to claim 1 or 2, characterised in that in the operating position of the connecting housing (1) the throttle channels (21) are located vertically at or in the region of the lowest point of the middle annular grooves (14) or roller bearings (8) and are formed by longitudinal grooves running axially along the surface of plugging bolts (46), which are inserted in bores (47) provided between the roller bearings (8) and their respective middle annular groove (14).

4. Clamping cylinder according to one of claims 1 to 3, characterised in that the outer annular grooves (22) communicate with the adjacent roller bearing (8) respectively via a radially wider annular gap (25).

5. Clamping cylinder according to one of claims 1 to 4, characterised in that the outer annular groove (22) and the oil overflow annular groove (18) have on each roller bearing (8) a common discharge aperture (24) into the oil collecting chamber (16).

6. Clamping cylinder according to one of claims 1 to 5, characterised in that in each oil overflow annular groove (18) an annular disc (26) is provided, which forms groove chambers which are free relative to the roller bearing (8) and the grove wall and rests on the guide projection (5) on its inner side and overlaps the roller bearing (8) radially to the outside.

7. Clamping cylinder according to claim 6, characterised in that the annular disc (25) is supported on its side facing away from the roller bearing (8) against an annular shoulder (27), which is formed by a collar (28) fixed to the guide projection (5), in that the connecting housing (9) seals with respect to the outer circumferential face (29) of the collar (28), and in that the sealing gap (30) formed between the collar (28) and the connecting housing (9) opens into the free groove chamber between the annular disc (26) and the axially outer groove wall (32) of the oil overflow annular groove (18), this opening being overlapped radially outwardly by the annular disc (26).

8. Clamping cylinder according to claim 7, characterised in that in the axially outer groove wall (32) of the oil overflow annular groove (18), at its vertically lowest point in the operating position of the connecting housing (9), an axially hollowed pocket (33) extending between the sealing gap aperture and the groove base (34) is provided, in the region of which the aperture of the discharge channel (19) lies, and in that between this groove wall (32) and the groove base (34) an axial undercut (35) is provided, which opens into the pocket on both sides in the circumferential direction.

9. Clamping cylinder according to claim 8, characterised in that the sealing gap (30) between the collar (28) and the connecting housing (9) is widened axially with clearance from the sealing gap aperture into the oil overflow annular groove (18) by an annular oil drainage groove (36) in the connecting housing (9), which drainage groove (36) touches the pocket (33) in the circumferential direction and radially opposite which an oil collecting groove (37) is located on the collar (28).

10. Clamping cylinder according to claim 1 or 4, characterised in that the outer annular grooves (22), and respectively the widened annular gaps (25) adjoining them, are located in the wall of the connecting housing (9).

## Revendications

1. Cylindre de serrage à actionnement oléohydraulique pour des dispositifs de serrage sur une broche tournante, broche de tour notamment, avec un carter cylindrique (1) qui peut être assemblé à la broche et un piston de serrage qui peut être déplacé dans la chambre cylindrique de ce carter, le carter cylindrique (1) et le piston de serrage tournant avec la broche, avec également un carter de raccordement fixe (9), présentant des raccords d'alimentation et d'évacuation d'huile extérieurs (10), qui est monté coaxialement à l'axe (4) du cylindre sur un appendice de guidage (5) du carter cylindrique (1) qui forme entre lui-même et le carter de raccordement (9) un joint d'étanchéité à fente annulaire remplie d'huile et présente des canaux de liaison (12) qui mènent d'une part aux chambres cylindriques des deux côtés du piston de serrage et qui débouchent d'autre part dans des rainures annulaires intérieures (11) ouvertes vers la fente annulaire (13) du joint d'étanchéité et reliées aux raccords d'alimentation et d'évacuation (10), avec encore des paliers à roulements (8) disposés axialement de part et d'autre de ces rainures annulaires intérieures (11) et radialement entre l'appendice de guidage (5) et le carter de raccordement (9), et des rainures annulaires centrales (14), prévues dans la paroi du carter de raccordement (9) et ouvertes vers la fente annulaire (13) du joint d'étanchéité, dont chacune est située axialement entre les rainures annulaires intérieures (11) d'une part et les paliers à roulements (8) d'autre part, et qui sont raccordées à une chambre collectrice d'huile (16) par des canaux d'évacuation (15) dans la paroi du carter de raccordement (9) et sont reliées aux paliers à roulements (8) en vue de leur lubrification, et avec une rainure annulaire d'huile de fuite (18) disposée dans le carter de raccordement (9) à côté de chaque palier (8) sur le côté de ce dernier qui est éloigné des rainures annulaires intérieures et centrales (11, 14), les rainures annulaires d'huile de fuite (18) étant elles-aussi raccordées à la chambre collectrice d'huile (16) par des canaux d'évacuation (19), caractérisé en ce que les rainures annulaires centrales (14) sont mutuellement reliées par au moins un canal compensateur s'étendant dans la paroi du carter de raccordement (9) et sont reliées par un canal à étranglement respectif (21) au palier (8) qui leur est voisin, en ce qu'il est en outre prévu, axialement entre chaque rainure annulaire centrale (14) et le palier (8) qui lui est voisin, une rainure annulaire extérieure (22), ouverte vers la fente annulaire (13) du joint d'étanchéité, qui est elle-aussi reliée à la chambre collectrice d'huile (16) par un canal d'évacuation (23) dans la paroi du carter de raccordement (9), et en ce que les canaux d'évacuation (23, 19) des rainures annulaires extérieures (22) et des rainures annulaires d'huile de fuite (18) d'une part, et les canaux d'évacuation (15) des rainures annulaires centrales (14) d'autre part, débouchent de manière séparée dans la chambre collectrice d'huile (16).

2. Cylindre de serrage selon la revendication 1, caractérisé en ce que, dans la position de service du carter de raccordement (9), la chambre collectrice d'huile (16) est disposée sur ce dernier en son point verticalement le plus bas et les canaux d'évacuation (15, 19, 23), qui partent des rainures annulaires (14, 18, 22) en leur point le plus bas ou dans la région de ce point, descendent jusqu'à la chambre collectrice d'huile (16).

3. Cylindre de serrage selon la revendication 1 ou 2, caractérisé en ce que, dans la position de service du carter de raccordement (9), les canaux à étranglements (21) sont disposés verticalement au point le plus bas des rainures annulaires centrales (14) ou des paliers à roulements (8), ou dans la région de ce point, et sont formés par des gorges longitudinales qui s'étendent axialement le long de la face latérale de bouchons (46) qui sont enfoncés dans des perçages (47) prévus entre les paliers à roulements (8) et leur rainure annulaire centrale respective (14).

4. Cylindre de serrage selon l'une des revendications 1 à 3, caractérisé en ce que les rainures annulaires extérieures (22) sont chacune reliées par une fente annulaire radialement élargie (25) au palier (8) qui leur est voisin.

5. Cylindre de serrage selon l'une des revendications 1 à 4, caractérisé en ce que la rainure annulaire extérieure (22) et la rainure annulaire d'huile de fuite (18) de chaque palier (8) présentent une embouchure commune (24) d'évacuation dans la chambre collectrice d'huile (16).

6. Cylindre de serrage selon l'une des revendications 1 à 5, caractérisé en ce qu'une couronne (26), qui forme un espace libre par rapport au palier (8) et à la paroi de la rainure (18) et qui repose intérieurement sur l'appendice de guidage (5) et recouvre radialement vers l'extérieur le palier (8), est disposée dans chaque rainure annulaire d'huile de fuite (18).

7. Cylindre de serrage selon la revendication 6, caractérisé en ce que la couronne (26) est appuyée axialement, sur son côté éloigné du palier (8), contre un épaulement annulaire (27) qui est formé par un collet (28) solidaire de l'appendice de guidage (5), en ce que le carter de raccordement (9) est étanché contre la face périphérique extérieure (29) du collet (28), et en ce que la fente annulaire (30) formée entre le collet (28) et le carter de raccordement (9) débouche dans l'espace libre entre la couronne (26) et la paroi axialement extérieure (32) de la rainure annulaire d'huile de fuite (18), cette embouchure étant recouverte radialement vers l'extérieur par la couronne (26).

8. Cylindre de serrage selon la revendication 7, caractérisé en ce qu'une poche (33), axialement creusée et s'étendant entre l'embouchure de la fente annulaire et le fond (34) de la rainure, est prévue dans la paroi axialement extérieure (32) de la rainure annulaire d'huile de fuite (18), en son point verticalement le plus bas dans la position de service du carter de raccordement (9), poche dans la région de laquelle se trouve l'embouchure du canal d'évacuation (19), et en ce qu'une encoche axiale (35), qui débouche périphériquement des deux côtés dans la poche (33), est prévue entre cette paroi de rainure (32) et le fond de rainure (34).

9. Cylindre de serrage selon la revendication (8), caractérisé en ce que la fente d'étanchéité (30) entre le collet (28) et le carter de raccordement (9) est élargie, axialement à distance de l'embouchure de la fente annulaire dans la rainure annulaire d'huile de fuite (18), par une rainure d'évacuation d'huile (36) de forme annulaire, pratiquée dans le carter de raccordement (9), qui entame périphériquement la poche (33) et radialement en vis-à-vis de laquelle est disposée, sur le collet (28), une rainure collectrice d'huile (37).

10. Cylindre de serrage selon la revendication 1 ou 4, caractérisé en ce que les rainures annulaires extérieures (22) ou les fentes annulaires élargies (25) qui s'y raccordent sont disposées dans la paroi du carter de raccordement (9).

Fig. 1

Fig.2

5

6

14

9

21

20

15 16 15 15

*Fig. 3*

5   6   33   30   32

*Fig. 6*

5
6
14
9

*Fig. 4*

21  15  16  15

5   6   9

*Fig. 5*

21  16  19